# EUROPÄISCHE PATENTSCHRIFT

(11) **EP 1 222 744 B1**
(45) Veröffentlichungstag und Bekanntmachung des Hinweises auf die Patenterteilung: **17.11.2004**
(21) Anmeldenummer: 00982935.9
(22) Anmeldetag: 28.09.2000
(51) Int. Cl.: H04B 1/20, H04L 12/28

(54) **VERFAHREN ZUR UMSETZUNG EINER FERNSTEUERUNG**
REMOTE CONTROL CONVERSION METHOD
PROCEDE DE CONVERSION D'UNE TELECOMMANDE

(30) Priorität: 30.09.1999 DE 19947099
(43) Veröffentlichungstag der Anmeldung: 17.07.2002
(73) Patentinhaber: SIEMENS AKTIENGESELLSCHAFT, 80333 München (DE)
(72) Erfinder: KAMPERSCHROER, Erich, 46499 Hamminkeln (DE)
(86) Internationale Anmeldenummer: PCT/DE2000/003430
(87) Internationale Veröffentlichungsnummer: WO 2001/024451

(56) Entgegenhaltungen:
- EP-A- 0 833 426
- EP-A- 0 932 275
- WO-A-94/14241
- US-A- 5 959 539

## Beschreibung

Eine Anordnung zum Ineinanderübersetzen von Protokolldateneinheiten inkompatibler Netze ist eine mit unter Umständen erheblicher Intelligenz ausgestattete Schnittstelle, die in der Fachsprache mit dem Begriff 'Gateway' bezeichnet wird. Diese Schnittstelle führt nach dem OSI-Referenzmodell (vgl. Unterrichtsblätter, Jg. 48, 2/1995, Seiten 102 bis 111 und N. Klußmann: Lexikon der Kommunikations- und Informationstechnik, 1997, Hüthig-Verlag, Seiten 360 bis 362) Funktionen der Schichten 3 oder höher (bis Schicht 7) aus.

Unter dem Begriff Netz werden sämtliche Ressourcen, die voneinander entfernte Dienstzugangspunkte verbinden und diesen Dienste zu Kommunikationszwecken zur Verfügung stellen, verstanden. Dieses trifft sowohl auf in ihrer Ausdehnung sehr begrenzte Netze, z. B. lokale Netze, als auch auf in ihrer Ausdehnung sehr große Netze, z. B. Telekommunikationsnetze, zu.

Netze, die bezüglich ihrer Protokolldateneinheiten inkompatibel sind, sind insbesondere Telekommunikationsnetze - z. B. das öffentliche Fernsprechnetz (PSTN), das diensteintegrierende digitale Netz (ISDN), das auf der asynchronen digitalen Teilnehmerleitung (ADSL) basierende Festnetz, das Mobilfunknetz nach dem GSM-Standard (erste und zweite Mobilfunkgeneration), das Mobilfunknetz nach dem UMTS-Standard (dritte Mobilfunkgeneration), das mobile Netz nach dem DECT- und/oder PHS-Standard, das globale Computernetz (Internet), das Stromversorgungsnetz und das Breitbandkabelnetz - und jegliche Art von lokalen Netzen - z. B. das Heim-Automation-System, bestehend aus einem Netzwerk mit einer Funk-, einer PLC-, einer IRDA-, einer InstaBus-, einer HES-Bus-, einer 'Twisted Pair'- oder einer Koaxialkabel-Übertragungsstrecke.

Das Heim-Automation-System beschreibt gemäß der Druckschriften *?Funkschau 3*/*1989, Seiten 45 und 46; Elektronik 18*/*1995, Seiten 50 bis 58; Elektronik 17*/*1996, Seiten 42 bis 47 und Seiten 48 bis 53; Elektronik 4*/*1997, Seiten 64 bis 72; Elektronik 1*/*1998, Seiten 30 bis 33; Elektronik 17*/*1998, Seiten 74 bis 77, Seiten 78 bis 81 und Seiten 82 bis 84?* das 'technische Management' von Häusern und Wohnungen. Hierunter wird alles das verstanden, was dem Komfort der Bewohner dient. Dazu zählen beispielsweise das Last- und Energiemanagement, die Warmwasserbereitung, die Beleuchtung, die Lüftungs- und Heizungsanlagen, die Bedienung von motorgetriebenen Elementen (z. B. Jalousien, Garagentore, Rolläden etc.) sowie die Sicherheits- und Schutzeinrichtungen (z. B. Rauch-/Feuermelder, Einbruch-Warnanlagen, Zugangsüberwachungsanlagen, Bewegungsmelder etc.).

DE-A-19904544 offenbart eine Anordnung zum Ineinanderübersetzen vom Protokolldateneinheiten inkompatibler Netze der Heim-Automation gemäß dem Stand der Technik.

Darüber hinaus erfaßt das 'technische Management' auch die Steuerung beliebiger weiterer elektrischer Geräte - vom Stellen einer Uhr bis zum Einschalten einer Kaffeemaschine. Bei der Installation von Heim-Automation-Systemen (Haus-Bussystemen) müssen für eine erfolgreiche Markteinführung im wesentlichen folgende Voraussetzungen erfüllt sein:
1. Verzicht auf zusätzliche Verkabelung
2. Geringer Kostenaufwand
3. Einheitliche Kommunikationsnorm
4. Interoperabilität
5. Plug-and-Play-Fähigkeit

In der jüngeren Vergangenheit haben sich im Bereich der Heim-Automation-Systeme, basierend auf unterschiedliche Ansätze (konsumgutorientierter Ansatz, installationsartikelorientierter Ansatz, computerhardwareorientierter Ansatz) diverse Standards für Heim-Bussysteme herauskristallisiert, die jedoch mehr oder weniger singuläre Lösungen für die Heim-Automation darstellen. Zu diesen Standards zählen:
1. Bei dem konsumgutorientierten Ansatz der Consumer Electronics Bus (CEBus), das ESPRIT Home System (EHS) und das Home Bus System (HBS),
2. bei dem installationsartikelorientierten Ansatz der Bati-Bus, der European Installation Bus (EIB) und das Smart House und
3. bei dem computerhardwareorientierten Ansatz das Local Operating Network (LON) und der The Real Time Operating System Nucleus (TRON).

Die Frage, welche der genannten Standards sich letztlich durchsetzen und somit zum De-facto-Standard wird, hängt im wesentlichen davon ab, wie attraktiv der jeweilige Standard für die Heim-Automation ist. Attraktiv und wirklich nützlich ist ein solches System jedoch nur dann, wenn es eine ausreichende Menge an Produkten gibt, die über dieses Netz kommunizieren. Nur wenn der Haus- bzw. Wohnbesitzer beim Kauf einer Waschmaschine, eines Elektroherdes etc. weiß, daß das jeweilige Gerät mit seinem Heim-Bussystem kommuniziert, wird er vielleicht die Zusatzkosten eines Heim-Automation-Systems zahlen und ein solches System in seinem Haus installieren. Wenn der Hersteller dieser Geräte aber nicht weiß, welches Bussystem letztlich das "Rennen" macht, wird dieser nicht ohne weiteres in eine teuere Schnittstelle für das jeweilige Bussystem investieren, um dann festzustellen, daß sich die Geräte durch diese Investition gar nicht besser verkaufen lassen.

Um die Attraktivität der vorstehend beschriebenen Heim-Automation-Systeme zu verbessern, ist somit eine 'Intelligente Heim-Schnittstelle' (Residential Gateway) erforderlich, die einerseits kostengünstig ist und die andererseits dem Hersteller von Geräten, die im Rahmen der Heim-Automation fernsteuerbar sind, vielfältige Variationsmöglichkeiten bezüglich der Realisierung der Schnittstellen für das bei der Heim-Automation verwendete Bussystem bietet.

Ein Anstatz für die Realisierung einer 'Intelligente Heim-Schnittstelle' (Residential Gateway) wie sie aus einer deutschen Patentanmeldung mit dem Titel "Anordnung zum Ineinanderübersetzen von Protokolldateneinheiten inkompatibler Netze" - amtliches Anmeldeaktenzeichen 19904544.5 - bekannt ist, besteht darin, das Ineinanderübersetzen von Protokolldateneinheiten inkompatibler Netze, einem Teiekommunikationsnetz - z. B. das öffentliche Fernsprechnetz (PSTN), das diensteintegrierende digitale Netz (ISDN), das auf der asynchronen digitalen Teilnehmerleitung (ADSL) basierende Festnetz, das Mobilfunknetz nach dem GSM-Standard (erste und zweite Mobilfunkgeneration), das Mobilfunknetz nach dem UMTS-Standard (dritte Mobilfunkgeneration), das mobile Netz nach dem DECTund/oder PHS-Standard, das globale Computernetz (Internet), das Stromversorgungsnetz und das Breitbandkabelnetz - und einem - z.B. als Heim-Automation-System, bestehend aus einem Netzwerk mit einer Funk-, einer PLC-, einer IRDA-, einer InstaBus-, einer HES-Bus-, einer 'Twisted Pair'- oder einer Koaxialkabel-Übertragungsstrecke ausgebildeten - lokalen Netz, mittels eines mit dem Telekommunikationsnetz verbundenen Telekommunikationsendgerätes, das eine Fernbedienungsstruktur aufweist und dem eine x-beliebige Schnittstelle zur Verbindung mit dem lokalen Netz über einen speziellen Netzadapter zugeordnet ist, zu realisieren.

Das Telekommunikationsendgerät wird dabei infolge der zunehmenden Konvergenz von Kommunikations- und Informationsgeräten um die Funktion 'intelligente Schnittstelle' (Funktion 'gateway') erweitert. Die zur Fernsteuerung von Geräten in dem lokalen Netzwerk zu übertragenen Informationen (z. B. Steuerbefehle, Statusinformationen, Alarmmeldungen etc.) werden von der Schnittstelle in einem speziellen Satzformat mit einem die Geräteidentifikation bzw. die Geräteadresse angebenden ersten Satzformatteil, einem den Steuerungsbefehl für das Gerät enthaltenen zweiten Satzformatteil und einem die Steuerungsnutzinformation enthaltenen dritten Satzformatteil übertragen.

Mit einem derart ausgestalteten Telekommunikationsendgerät lassen sich beliebige mit dem Telekommunikationsendgerät verbundene Geräte ansteuern.

Dazu muß ein Bediener von einer entfernten Bedieneinheit beispielsweise lediglich durch Übertragen der Geräteidentifikation und des Steuerungsbefehles eine Aktion in dem durch die Geräteidentifikation festgelegten Gerät auslösen.

In vielen Fällen existiert jedoch das Kundenbedürfnis, Szenarien ein- bzw. ausschalten. Szenario bedeutet hierbei, daß mit Übertragung einer Anweisung durch den Bediener mehrere, d.h. eine Auswahl, der an das Telekommunikationsendgerät angeschlossenen Geräte in einen für eine bestimmte Situation üblichen Modus gesteuert werden. Der Bediener will beispielsweise am Abend durch die Übertragung der Steueranweisung alle Fensterrolläden herunterfahren lassen und eine Außenleuchte einschalten, oder bei Abwesenheit alle Fensterrolläden herunterfahren und einen Bewegungsmelder einschalten, um mit diesem Abendszenario oder Abwesenheitszenario Einbrüche zu verhindern.

Eine Lösung für diese Anforderung stellt ein sog. Szenariobaustein dar. Dieser Szenariobaustein ist ein eigenständiges Gerät, das in einem Hausbussystem, das beispielsweise nach dem EIB-Bus Ansatz aufgebaut ist, eingesetzt wird. Dieser Szenariobaustein steuert zentral mehrere Geräte an und ist wie die zu steuernden Geräte beispielsweise an die Telekommunikationendseinrichtung angeschlossen. Zum Ein- und Ausschalten eines Szenarios wird über die Telekommunikationsendeinrichtung eine Anweisung zu dem Szenariobaustein übertragen, der dann über den verwendeten Hausbus die Auswahl an Geräten in den für das Szenario notwendigen und gewünschten Modus steuert.

Nachteilig an dieser Lösung ist das Erfordernis von zusätzlicher Hardware, die zudem nur mit dem verwendeten Hausbussystem kommuniziert.

Die der Erfindung zugrundeliegende Aufgabe besteht darin, ein Verfahren zur Umsetzung einer Fernsteuerung, insbesondere in Heim-Automation-Systemen, anzugeben, das kostengünstig und einfach zu realisieren sowie für jeweils unterschiedliche Netztypen (z.B. die vorstehend genannten Typen von Netzen) universell einsetzbar ist.

Diese Aufgabe wird durch die Merkmale des Patentanspruchs 1 gelöst.

Beim erfindungsgemäßen Verfahren - gemäß Anspruch 1 - wird für jedes Gerät, daß mit einer Telekommunikationsendeinrichtung verbunden und damit in einem lokalen Netz aufgenommen wird, eine eindeutige Geräteidentifikation zugeordnet, mit der die Telekommunikationsendeinrichtung das jeweilige Gerät insbesondere im Zuge einer Fernsteuerung ansprechen kann und durch die sich jedes Gerät identifiziert. In einer Liste wird eine Zuordnung von jeweils einem Kanal zu mindestens einer Geräteidentifikation gespeichert, wobei bei einer Zuordnung von genau einer Geräteidentifikation zum Kanal, dem Kanal ein Primärdatensatz zugeordnet wird, der zumindest die einzelne Geräteidentifikation enthält und bei einer Zuordnung von mindestens einer Geräteidentifikation mit mindestens einem Steuerungsbefehl zum Kanal, dem Kanal ein Sekundärdatensatz zugeordnet wird, der zumindest mindestens die eine Geräteidentifikation mit mindestens einem Steuerungsbefehl in geordneter Reihenfolge enthält. Wird der Telekommunikationsendeinrichtung eine Auswahl eines Kanals übermittelt, so wird aus der Liste der zum Kanal gehörige Datensatz ausgelesen. Handelt es sich bei dem Datensatz um einen Primärdatensatz, so wird aufgrund der darin enthaltenen einzigen Geräteidentifikation ein mit der Telekommunikationsendeinrichtung verbundenes Gerät ausgewählt und lediglich angesteuert ist der Datensatz ein Sekundärdatensatz, so wird nacheinander aufgrund jeweils einer Geräteidentifikation ein mit der Telekommunikationsendeinrichtung verbundenes Gerät ausgewählt, angesteuert und nacheinander jeweils ein Steuerungsbefehl an das Gerät übertragen.

Durch das erfindungsgemäße Verfahren erhält ein Benutzer der Fernsteuerung mindestens eines in einem lokalen Netz enthaltenen mit einer Telekommunikationsendeinrichtung verbundenen Gerätes die Möglichkeit in einem Heim-Automations-System eine Szenarien zu steuern, wobei bereits Szenarien durch ein Gerät mit einem Steuerungsbefehl festgelegt werden können. Zudem ist die Fernsteuerung von mindestens einem in dem lokalen Netz mit der Telekommunikationseinrichtung verbundenen Gerätes ohne zusätzlichen Hardwareaufwand und unabhängig von dem im Heim-Automation-System eingesetzten Lösungsansatza möglich.

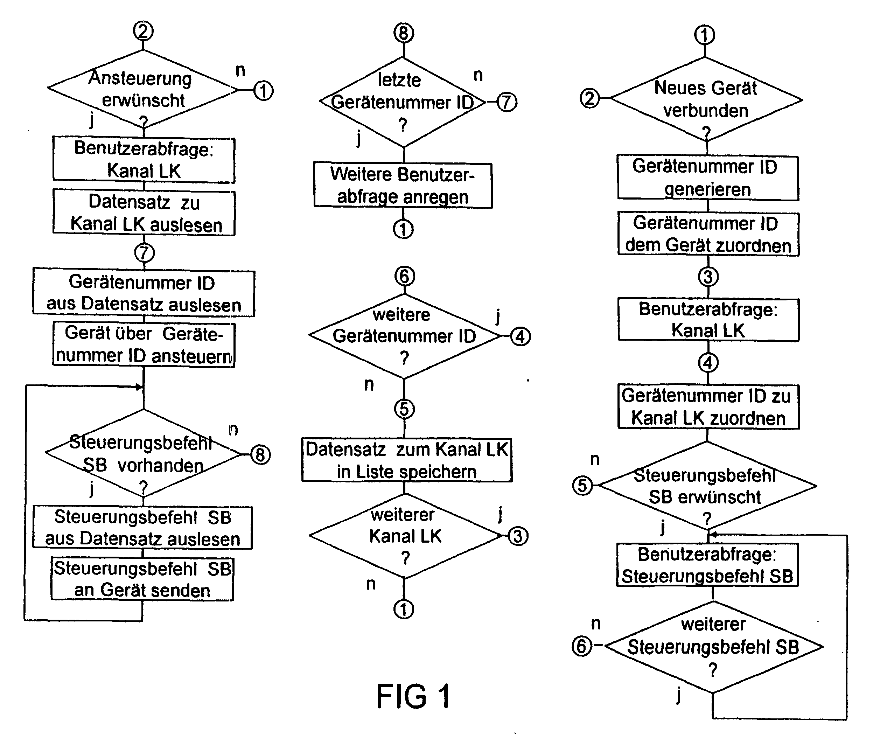

Ein Ausführungsbeispiel der Erfindung wird anhand der einzigen FIGUR erläutert. Diese zeigt:
Ein Ablaufdiagramm zur Umsetzung einer Fernsteuerung mindestens eines in einem lokalen Netz enthaltenen mit einer Telekommunikationsendeinrichtung verbundenen Gerätes.

In der FIGUR wird anhand eines Ablaufdiagramms das Verfahren zur Umsetzung einer Fernsteuerung mindestens eines in einem lokalen Netz enthaltenen mit einer Telekommunikationsendeinrichtung verbundenen Gerätes beschrieben.

Zu Beginn 1 des Verfahrens, daß in einem Telekommunikationsendgerät - insbesondere im Hintergrund - abläuft, so daß die in Telekommunikationsendeinrichtungen üblichen Verfahren weitestgehend ungestört ablaufen, wird zunächst geprüft, ob ein neues Gerät mit der Telekommunikationsendeinrichtung verbunden wurde.

Ist ein neues Gerät verbunden worden, wird für das Gerät eine Gerätenummer ID generiert, die dem Gerät zur Geräteidentifikation eindeutig zugeordnet wird.

Das Generieren der Gerätenummer ID erfolgt derart, daß den Geräten eine fortlaufende Nummer zugeordnet wird. D.h. die jeweils zuletzt vergebene Gerätenummer ID wird inkrementiert und dem jeweils neu verbundenen Gerät zugeordnet.

Alternativ dazu kann als Geräteidentifikation eine Gerätenummer ID dem Gerät zugeordnet werden, die durch das Gerät vorgegeben wird und nach dem Verbinden mit der Telekommunikationsendeinrichtung, dieser Telekommunikationsendeinrichtung im Zuge eines Initialisierungsvorgangs übermittelt wird.

Denkbar ist die Ausgestaltung einer Geräteidentifikation ID als eine Kombination aus alphabetischen und/oder numerischen Zeichen.

Nach dem Zuordnen der Gerätenummer ID wird der Benutzer aufgefordert, eine Kanalnummer LK anzugeben. Existiert zu dieser Kanalnummer bereits ein gespeicherter Sekundärdatensatz, so wird die Gerätenummer ID diesem Datensatz hinzugefügt und die Eingabe von zu der Gerätenummer zuzuordnenden Steuerungsbefehlen wird erwartet, da der Sekundärdatensatz eine Szenariosteuerung impliziert, sonst wird ein neuer zu der Kanalnummer LK zugehöriger Datensatz gebildet, zu dem die Gerätenummer ID hinzugefügt wird.

Wird der neue Datensatz gebildet und ist eine Szenariosteuerung beabsichtigt, gibt der Benutzer im nächsten Schritt mindestens einen zur Gerätenummer ID zugeordneten Steuerungsbefehl ein, der gemeinsam mit der zugeordneten Gerätenummer ID als Sekundärdatensatz gespeichert wird. Wurde ein neuer zur Kanalnummer LK zugehöriger Datensatz gebildet, der nur eine einzige Gerätenummer ID enthält - keine Szenariosteuerung beabsichtigt - und soll durch die Kanalnummer keine Szenariosteuerung ausgegeben werden, so findet keine Eingabe eines Steuerungsbefehls statt und die Gerätenummer ID wird als Primärdatensatz gespeichert.

Ergibt die Abfrage zu Beginn 1 des Verfahrens, daß kein neues Gerät angeschlossen wurde, wird überprüft, ob eine Ansteuerung eines Gerätes erwünscht ist. Ist dies der Fall übermittelt der Benutzer eine Kanalnummer LK.

Bei Erhalt der Kanalnummer LK wird anschließend der in der Liste gespeicherte zu dieser Kanalnummer LK zugehörige Datensatz ausgelesen und ausgewertet.

Enthält der Datensatz nur eine Gerätenummer ID ohne einen Steuerungsbefehl, so handelt es sich bei dem Datensatz um einen Primärdatensatz, und es wird lediglich das durch die Gerätenummer ID identifizierte Gerät angesteuert und anschließend weitere Benutzerangaben angeregt.

Enthält der Datensatz mindestens eine Gerätenummer ID mit mindestens einem Steuerungsbefehl, so handelt es sich bei dem Datensatz um einen Sekundärdatensatz, und es wird der Reihe nach jeweils ein durch eine Gerätenummer ID identifiziertes Gerät angesteuert und nacheinander jeweils ein zur jeweiligen Gerätenummer ID zugeordnet gespeicherter Steuerungsbefehl an das jeweilige Gerät übertragen, wobei erst wenn alle zu einer Gerätenummer ID zugeordnet gespeicherten Steuerungsbefehle abgearbeitet sind, das nächste durch die nächste Gerätenummer ID identifizierte Gerät angesteuert und die zugeordnet gespeicherten Steuerungsbefehle übermittelt. Nach Auswahl der letzten Gerätenummer ID und Abarbeiten den der Gerätenummer ID zugeordnet gespeicherten Steuerungsbefehle sind alle durch die im Sekundärdatensatz enthaltenen Gerätenummern ID identifizierten Geräte in einem durch die den Gerätenummern ID zugeordnet gespeicherten Steuerungsbefehle definierten Zustand.

Die Angabe der Kanalnummer LK ermöglicht dem Bediener daher eine Szenario-Steuerung, bei der mindestens ein Gerät in einen definierten Zustand versetzt wird.

Ist keine Ansteuerung eines Gerätes erwünscht, so wird das Verfahren ebenfalls am Startpunkt 1 fortgesetzt.

Die genannten Ausführungsbeispiele stellen nur einen Teil der durch die Erfindung möglichen Ausführungsformen dar. So ist ein auf diesem Gebiet tätiger Fachmann in der Lage, durch vorteilhafte Modifikationen eine Vielzahl von weiteren Ausführungsformen zu schaffen, ohne daß dabei der Charakter (Wesen) der Erfindung verändert wird. Diese Ausführungsformen sollen ebenfalls durch die Erfindung mit erfaßt sein.

## Patentansprüche

1. Verfahren zur Umsetzung einer Fernsteuerung mindestens eines in einem lokalen Netz enthaltenen mit einer Telekommunikationsendeinrichtung verbundenen Gerätes mit folgenden Merkmalen:
(a) Dem in dem lokalen Netz enthaltenen mit der Telekommunikationsendeinrichtung verbundenen Gerät wird eine eindeutige Geräteidentifikation (ID) zugeordnet,
(b) in einem Teilbereich eines Speichers der Telekommunikationsendeinrichtung wird eine Liste gespeichert, in der eine eindeutige Zuordnung von jeweils einem logischen Kanal (LK) zu mindestens einer Geräteidentifikation (ID) derart angegeben ist, daß bei einer Zuordnung von genau einer Geräteidentifikation (ID) zu dem logischen Kanal (LK), dem logischen Kanal (LK) ein Primärdatensatz zugeordnet wird und bei einer Zuordnung von mindestens einer Geräteidentifikation (ID) mit jeweils mindestens einem Steuerungsbefehl zu dem logischen Kanal(LK), dem logischen Kanal (LK) ein Sekundärdatensatz zugeordnet wird,
(c) der Primärdatensatz wird derart gebildet, daß zumindest die Geräteidentifikation (ID) enthalten ist, und der Sekundärdatensatz wird derart gebildet, daß zumindest mindestens eine der Geräteidentifikation (ID) mit mindestens einem Steuerungsbefehl in einer geordneten Reihenfolge enthalten ist,
(d) das in dem lokalen Netz enthaltene mit der Telekommunikationsendeinrichtung verbundene Gerät wird derart angesteuert, daß bei einem dem logischen Kanal zugeordneten Primärdatensatz genau ein durch die enthaltene Geräteidentifikation bestimmtes Gerät angesteuert wird, und bei einem dem logischen Kanal (LK) zugeordneten Sekundärdatensatz mindestens ein durch eine Geräteidentifikation bestimmtes Gerät in der geordneten Reihenfolge nacheinander angesteuert wird sowie jeweils mindestens ein zur jeweiligen Geräteidentifikation (ID) vorgegebener Steuerungsbefehl an das Gerät übertragen wird, wenn der Telekommunikationsendeinrichtung die Wahl eines logischen Kanals (LK) übermittelt wird.

2. Verfahren nach Anspruch 1, **dadurch gekennzeichnet, daß**
dem in dem lokalen Netz enthaltenen mit der Telekommunikationsendeinrichtung verbundenen Gerät eine alphanumerische Gerätekennung als Geräteidentifikation (ID) zugeordnet wird, die von dem mit der Telekommunikationsendeinrichtung verbundenen Gerät der Telekommunikationsendeinrichtung übermittelt wird.

3. Verfahren nach Anspruch 1, **dadurch gekennzeichnet, daß**
(a) dem in dem lokalen Netz enthaltenen mit der Telekommunikationsendeinrichtung verbundenen Gerät eine Gerätenummer als Geräteidentifikation (ID) zugeordnet wird,
(b) die Gerätenummer für jedes weitere mit der Telekommunikationsendeinrichtung verbundenen Gerät um eins erhöht wird.

## Claims

1. Method for remote control conversion of at least one appliance which is contained in a local area network and is connected to a telecommunications terminal, having the following features:
(a) a unique appliance identification (ID) is allocated to the appliance which is contained in the local area network and is connected to the telecommunications terminal,
(b) one subregion of a memory in the telecommunications terminal contains a stored list in which a unique association of in each case one logical channel (LK) to at least one appliance identification (ID) is specified such that, when one and only one appliance identification (ID) is associated with the logical channel (LK), that logical channel (LK) has a primary data record associated with it and, if at least one appliance identification (ID) is associated with that logical channel (LK) by means of in each case at least one control command, that logical channel (LK) has an associated secondary data record,
(c) the primary data record is formed such that at least the appliance identification (ID) is included, and the secondary data record is formed such that at least one of the appliance identifications (ID) is contained in an organized sequence with at least one control command,
(d) the appliance which is contained in the local area network and is connected to the telecommunications terminal is driven such that, if there is a primary data record associated with the logical channel, one and only one appliance which is defined by the included appliance identification is driven and, if there is a secondary data record associated with that logical channel (LK), at least one appliance which is defined by an appliance identification is driven successively in the organized sequence, and in each case at least one control command, which is predetermined for the respective appliance identification (ID) is transmitted to that appliance when the choice of a logical channel (LK) is transmitted to the telecommunications terminal.

2. Method according to Claim 1, **characterized in that** the appliance which is contained in the local network and is connected to the telecommunications terminal is allocated an alphanumeric appliance identification as the appliance identification (ID), which is transmitted by the appliance that is connected to the telecommunications terminal to that telecommunications terminal.

3. Method according to Claim 1, **characterized in that**
(a) the appliance which is contained in the local area network and is connected to the telecommunications terminal is allocated an appliance number as the appliance identification (ID),
(b) the appliance number is incremented by one for each further appliance which is connected to the telecommunications terminal.

## Revendications

1. Procédé pour la conversion d'une télécommande d'au moins un appareil contenu dans un réseau local et connecté à un dispositif terminal de télécommunication, comportant les caractéristiques suivantes:
(a) une identification d'appareil univoque (ID) est affectée à l'appareil contenu dans le réseau local et connecté au dispositif terminal de télécommunication;
(b) dans une zone partielle d'une mémoire du dispositif terminal de télécommunication est mise en mémoire une liste dans laquelle une affectation univoque de respectivement un canal logique (LK) à au moins une identification d'appareil (ID) est indiquée de manière telle que, dans le cas d'une affectation d'exactement une identification d'appareil (ID) au canal logique (LK), un jeu de données primaires est affecté au canal logique (LK) et, dans le cas d'une affectation d'au moins une identification d'appareil (ID) avec respectivement au moins une instruction de commande au canal logique (LK), un jeu de données secondaires est affecté au canal logique (LK);
(c) le jeu de données primaires est constitué de manière telle qu'au moins l'identification d'appareil (ID) est contenue et le jeu de données secondaires est constitué de manière telle que du moins l'au moins une des identifications d'appareil (ID), avec au moins une instruction de commande, est contenue dans une suite ordonnée;
(d) l'appareil contenu dans le réseau local et connecté au dispositif terminal de télécommunication est excité de manière telle que, dans le cas d'un jeu de données primaires affecté au canal logique, exactement un appareil déterminé par l'identification d'appareil contenue est excité et que, dans le cas d'un jeu de données secondaires affecté au canal logique (LK), au moins un appareil déterminé par une identification d'appareil est successivement excité dans la suite ordonnée et respectivement au moins une instruction de commande prédéterminée pour l'identification d'appareil (ID) respective est transmise à l'appareil lorsque la sélection d'un canal logique (LK) est transmise au dispositif terminal de télécommunication.

2. Procédé selon la revendication 1, **caractérisé en ce qu'**à l'appareil contenu dans le réseau local et connecté au dispositif terminal de télécommunication est affecté un identificateur d'appareil alphanumérique en tant qu'identification d'appareil (ID), lequel est transmis au dispositif terminal de télécommunication par l'appareil connecté au dispositif terminal de télécommunication.

3. Procédé selon la revendication 1, **caractérisé en ce que**
(a) à l'appareil contenu dans le réseau local et connecté au dispositif terminal de télécommunication est affecté un numéro d'appareil en tant qu'identification d'appareil (ID) et **en ce que**
(b) le numéro d'appareil pour chaque autre appareil connecté au dispositif terminal de télécommunication est augmenté de un.
